# EUROPEAN PATENT APPLICATION

(11) **EP 4 691 594 A1**
(43) Date of publication of application: **11.02.2026**
(21) Application number: 24193743.2
(22) Date of filing: 08.08.2024
(51) Int. Cl.: B01D 39/16, B01D 46/00

(54) **FILTER MEDIUM AND METHOD OF PRODUCING A FILTER MEDIUM**

(71) Applicant: Neenah Gessner GmbH, 83052 Bruckmühl (DE)
(72) Inventor: GEISBERGER, Georg, 83052 Bruckmühl (DE); FRITZ, Ellen, 83052 Bruckmühl (DE)
(74) Representative: Haseltine Lake Kempner LLP

(57) **Abstract**

Described herein is a filter medium comprising a carrier layer; a melt-blown layer; and a spunbond layer. The melt-blown layer is disposed between the carrier layer and the spunbond layer. The spunbond layer comprises bicomponent fibres. The spunbond layer may have a basis weight of from about 10 g/m² to about 40 g/m² and may have a thickness of at least about 250 µm. Also described herein is a method of producing the filter medium and filters and apparatus comprising the filter medium.

## Description

### BACKGROUND OF THE INVENTION

Currently, many air conditioning (e.g., HVAC units) include pocket filters or bag filters. These filters can include a filter medium comprising a nonwoven carrier layer, a melt-blown filter layer, and a carded nonwoven layer. The carded nonwoven layer functions as a pre-filter and is therefore disposed on the upstream side of the filter medium in use. In many such filters, the carded nonwoven layer is a polyester layer with a relatively high basis weight of, for example, 40 g/m². Such a high basis weight is required for the filter media to achieve the high dust holding capacities required to comply with the filter classes ePM1, ePM2.5 and/or ePM10 (as defined in ISO 16890 standard) for use in air conditioning units.

### SUMMARY OF THE INVENTION

In an aspect, there is provided a filter medium comprising a carrier layer; a melt-blown layer; and a spunbond layer; wherein the melt-blown layer is disposed between the carrier layer and the spunbond layer and the spunbond layer comprises bicomponent fibres.

In another aspect, there is provided a method of producing a filter medium comprising melt-blowing a polymer onto a carrier layer to form a first composite comprising a melt-blown layer and a carrier layer; and contacting a spunbond layer with the first composite to form a filter medium comprising a carrier layer; a melt-blown layer; and a spunbond layer, wherein the melt-blown layer is disposed between the carrier layer and the spunbond layer and the spunbond layer comprises bicomponent fibres.

In a further aspect, there is provided a filter comprising the filter medium described herein. The filter may or comprise a bag filter or a pocket filter.

In an additional aspect, there is provided an HVAC unit comprising a filter medium described herein or a filter described herein.

Examples of the filter media and methods described herein have been found to avoid or at least mitigate at least one of the difficulties with filter media. For example, the inclusion of a low density bicomponent spunbond layer as a pre-filter layer in the filter medium provides a lower basis weight filter medium with a comparable or improved filtration efficiency to a filter medium comprising a carded nonwoven pre-filter layer, whilst reducing the amount of materials used. The inclusion of a bicomponent spunbond layer of the type described herein may provide a filter medium with a comparable dust holding capacity (DHC) to filter media in which the pre-filter layer is a carded nonwoven. Moreover, the raw materials used to produce the bicomponent spunbond layer are more readily available and lower cost. In addition, the maximum roll length of filter media of the type described herein is longer due to, among other factors, the lower overall basis weight and thickness of the filter medium, improving production efficiency and output by reducing machine downtime caused by roll changes. Furthermore, the economic and environmental costs per square meter of filter medium are reduced.

### BRIEF DESCRIPTION OF DRAWINGS

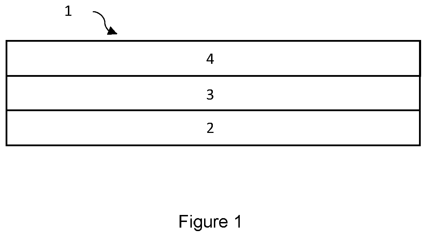

Figure 1 is a schematic representation of an example filter medium of the type described herein.

### DETAILED DESCRIPTION OF THE INVENTION

Before the present disclosure is disclosed and described, it is to be understood that this disclosure is not limited to the particular process steps and materials disclosed herein because such process steps and materials may vary somewhat. It is also to be understood that the terminology used herein is used for the purpose of describing particular embodiments. The terms are not intended to be limiting because the scope is intended to be limited by the appended claims and equivalents thereof.

It is noted that, as used in this specification and the appended claims, the singular forms "a," "an," and "the" include plural referents unless the context clearly dictates otherwise.

As used herein, "copolymer" refers to a polymer that is polymerized from at least two monomers.

A certain monomer may be described herein as constituting a certain weight percentage of a polymer. This indicates that the repeating units formed from the said monomer in the polymer constitute said weight percentage of the polymer.

If a standard test is mentioned herein, unless otherwise stated, the version of the test to be referred to is the most recent at the time of filing this patent application.

As used herein, "NVS" is an abbreviation of the term "non-volatile solids".

As used herein, the term "about" is used to provide flexibility to a numerical range endpoint by providing that a given value may be a little above or a little below the endpoint to allow for variation in test methods or apparatus. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the limits of the range, but also to include all the individual numerical values or sub-ranges encompassed within that range as if each numerical value and sub-range is explicitly recited. As an illustration, a numerical range of "about 1 wt.% to about 5 wt.%" should be interpreted to include not just the explicitly recited values of about 1 wt.% to about 5 wt.%, but also to include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

As used herein, unless otherwise stated, wt.% values are to be taken as referring to a weight-for-weight (w/w) percentage.

As used herein, an HVAC unit is a heating, ventilation and air conditioning unit.

As used herein, bicomponent fibres are fibres made from two materials. Generally, bicomponent fibres are polymer fibres comprising two polymers, wherein one polymer has a lower melting point than the other polymer. There are multiple different types of bicomponent fibre, including side-by-side bicomponent fibres (e.g., with a weight ratio of 50:50 or an unequal weight ratio of the two polymers), core-sheath bicomponent fibres (e.g., concentric core-sheath bicomponent fibres, or eccentric core-sheath bicomponent fibres), segmented bicomponent fibres and islands-in-the-sea bicomponent fibres. In contrast, monocomponent fibres are polymer fibres comprising a single material, for example a single polymer, such as a single homopolymer or a single copolymer.

Unless otherwise stated, the basis weight of a layer or of the filter medium may be measured according to EN ISO 536:2019.

Unless otherwise stated, the thickness of a layer or of the filter medium may be measured according to ISO 9073-2 (1995) at a test plate pressure of 0.5 kPa. The test area may be 2500 mm² (56.42 mm diameter).

Unless otherwise stated, the air permeability of a layer or of the filter medium may be measured according to measured according to DIN EN ISO 9237:1995 at a pressure difference of 200 Pa with a sample size of 20 cm². The air permeability may be measured using a Textest FX3300 instrument with a 20 cm² testing head.

Unless otherwise stated, the dust holding capacity (also referred to as the dust loading) of a layer or of the filter medium may be measured according to DIN71460-1:2006 using ISO 12103-A2 (ISO fine) as the test dust. The test conditions may involve an incoming flow volume of 20 cm/s, a filter area of 100 cm², a final pressure of +50 Pa, and a mass concentration of 75 g/m³.

Unless otherwise stated, the efficiency of a layer or of the filter medium may be measured according to ISO 16890:2016. This standard is based on tests using DEHS and KCI as test aerosols with a particle size of 0.3 to 10 µm and classifies the filter medium based on the results for particle sizes PM₁, PM_{2.5} and PM₁₀.

Unless otherwise stated, the fibre diameter may be measured according using a scanning electron microscope using automated software (e.g., using a scanning electron microscope available from Phenom Fei with the associated software Fibermetric V2.1). Measurements that capture crossing points of multiple fibres (and therefore do not represent the fibre diameter) are removed manually. Fibre bundles are generally evaluated as one fibre. Measurements are determined by sampling 5 points across the width of a nonwoven fabric (e.g., 1.8 m). Measurements are taken at random on the basis of the SEM image recorded with 1000 fold-magnification. The average fibre diameter at each location is evaluated by the software and an average of the 5 values is taken to determine the average fibre diameter of the nonwoven. At least 500 fibres are measured.

### Filter media

In an aspect, there is provided a filter medium comprising a carrier layer, a melt-blown layer, and a spunbond layer, wherein the melt-blown layer is disposed between the carrier layer and the spunbond layer and the spunbond layer comprises bicomponent fibres. In some examples, the filter medium may consist of or consist essentially of a carrier layer, a melt-blown layer, and a spunbond layer. The filter medium may comprise, consist of or consist essentially of any carrier layer described herein, any melt-blown layer described herein and any spunbond layer described herein.

In some examples, the carrier layer may be in contact with the melt-blown layer and/or the melt-blown layer may be in contact with the spunbond layer. In some examples, the filter medium comprises a carrier layer, a melt-blown layer and a spunbond layer, wherein the carrier layer is in contact with the melt-blown layer and the melt-blown layer is in contact with the spunbond layer.

In use, the spunbond layer may be a pre-filter layer such that the fluid being filtered passes through the spunbond layer prior to passing through the melt-blown layer and the carrier layer. In some examples, the carrier layer may not significantly contribute to the filtration efficiency of the filter medium. The carrier layer may be a support layer and/or a protective layer.

In some examples, the filter medium may have a total basis weight of up to about 110 g/m², for example, up to about 105 g/m², up to about 100 g/m², up to about 95 g/m², up to about 90 g/m², up to about 85 g/m², or up to about 80 g/m². In some examples, the filter medium may have a total basis weight of at least about 30 g/m², for example, at least about 35 g/m², at least about 40 g/m², at least about 45 g/m², at least about 50 g/m², or at least about 60 g/m². In some examples, the filter medium may have a total basis weight of from about 30 g/m² to about 110 g/m², for example, about 35 g/m² to about 105 g/m², about 40 g/m² to about 100 g/m², about 45 g/m² to about 95 g/m², about 50 g/m² to about 90 g/m², about 55 g/m² to about 85 g/m², or about 60 g/m² to about 80 g/m².

In some examples, the filter medium has a total thickness of at least about 0.6 mm, for example, at least about 0.7 mm, at least about 0.8 mm, at least about 0.9 mm, at least about 1 mm, at least about 1.5 mm, at least about 2 mm, at least about 2.5 mm, or at least about 3 mm. In some examples, the filter medium has a total thickness of up to about 7 mm, for example, up to about 6.5 mm, up to about 6 mm, up to about 5.5 mm, up to about 5 mm, up to about 4.5 mm, up to about 4 mm, up to about 3.5 mm, up to about 3 mm, up to about 2.9 mm, up to about 2.8 mm, up to about 2.7 mm, up to about 2.6 mm, up to about 2.5 mm, up to about 2 mm, up to about 1.5 mm, up to about 1 mm or up to about 0.5 mm. In some examples, the filter medium has a total thickness of from about 0.6 mm to about 7 mm, for example, about 0.7 mm to about 6.5 mm, about 0.8 mm to about 6 mm, about 0.9 mm to about 5.5 mm, about 1 mm to about 5 mm, about 1.1 mm to about 4.5 mm, about 1.5 mm to about 3 mm.

In some examples, the filter medium may have an air permeability of at least about 250 I/m²s, for example, at least about 300 I/m²s, at least about 350 I/m²s, at least about 400 I/m²s, at least about 450 I/m²s, at least about 500 I/m²s, at least about 550 l/m²s, at least about 600 I/m²s, at least about 650 I/m²s, at least about 700 I/m²s, at least about 750 I/m²s, at least about 800 I/m²s, at least about 1000 I/m²s, at least about 1050 I/m²s, at least about 1100 I/m²s, at least about 1150 I/m²s, at least about 1200 l/m²s, at least about 1250 I/m²s, at least about 1300 I/m²s, at least about 1350 I/m²s, or at least about 1400 I/m²s. In some examples, the filter medium may have an air permeability of up to about 1400 I/m²s, for example, up to about 1350 I/m²s, up to about 1300 I/m²s, up to about 1250 I/m²s, up to about 1200 I/m²s, up to about 1150 l/m²s, up to about 1100 I/m²s, up to about 1050 I/m²s, up to about 1000 I/m²s, up to about 950 I/m²s, up to about 900 I/m²s, up to about 850 I/m²s, up to about 800 I/m²s, up to about 750 I/m²s, up to about 700 I/m²s, up to about 650 l/m²s, up to about 600 I/m²s, up to about 550 I/m²s, up to about 500 I/m²s, up to about 450 I/m²s, up to about 400 I/m²s, up to about 350 I/m²s, up to about 300 I/m²s, or up to about 250 I/m²s. In some examples, the filter medium may have an air permeability of from about 250 I/m²s to about 1400 l/m²s, for example, about 250 I/m²s to about 1500 I/m²s, about 300 I/m²s to about 1450 I/m²s, about 350 I/m²s to about 1400 I/m²s, about 400 I/m²s to about 1350 I/m²s, about 450 I/m²s to about 1300 l/m²s, about 500 I/m²s to about 1250 I/m²s, about 550 I/m²s to about 1200 I/m²s, about 600 I/m²s to about 1150 I/m²s, about 650 I/m²s to about 1100 I/m²s, about 700 I/m²s to about 1050 l/m²s, about 750 I/m²s to about 1000 I/m²s, about 800 I/m²s to about 950 I/m²s, or about 850 I/m²s to about 900 I/m²s.

In some examples, the filter medium may have a dust holding capacity of at least about 12 g/m², for example, at least about 13 g/m², at least about 14 g/m², at least about 15 g/m², at least about 20 g/m², at least about 25 g/m², at least about 30 g/m², at least about 35 g/m², at least about 40 g/m², at least about 45 g/m², at least about 50 g/m², at least about 55 g/m², at least about 60 g/m², at least about 65 g/m², at least about 70 g/m², at least about 75 g/m², or at least about 80 g/m². In some examples, the filter medium may have a dust holding capacity of up to about 80 g/m², for example, up to about 75 g/m², up to about 70 g/m², up to about 65 g/m², up to about 60 g/m², up to about 55 g/m², up to about 50 g/m², up to about 45 g/m², up to about 40 g/m², up to about 35 g/m², up to about 30 g/m², up to about 25 g/m², up to about 20 g/m², up to about 15 g/m², up to about 14 g/m², up to about 13 g/m², up to about 12 g/m². In some examples, the filter medium may have a dust holding capacity of from about 12 g/m² to about 80 g/m², for example, from about 13 g/m² to about 75 g/m², from about 14 g/m² to about 70 g/m², about 15 g/m² to about 65 g/m², about 20 g/m² to about 60 g/m², about 25 g/m² to about 55 g/m², about 30 g/m² to about 50 g/m², about 35 g/m² to about 45 g/m², or about 40 g/m² to about 80 g/m².

In some example, the filter medium may have an efficiency of greater than or equal to 50% according to the ePM10 standard, greater than or equal to 50% according to the ePM2.5 standard or greater than or equal to 50% according to the ePM1 standard.

Figure 1 shows schematically an example of a filter medium (1) comprising a carrier layer (2), a melt-blown layer (3) and a spunbond layer (4), the spunbond layer (4) comprising bicomponent fibres and the melt-blown layer (3) disposed between the carrier layer (2) and the spunbond layer (4).

### Spunbond Laver

The filter medium comprises a spunbond layer comprising bicomponent fibres. The spunbond layer may constitute a pre-filter layer of the filter medium.

In some examples, the spunbond layer may have a basis weight of from about 10 g/m² to about 40 g/m². In some examples, the spunbond layer may have a thickness of at least about 250 µm. In some examples, the spunbond layer may have a density of up to about 0.2 g/cm³, for example, up to about 0.1 g/cm³, for example, from about 0.01 g/cm³ to about 0.2 g/cm³, or from about 0.01 g/cm³ to about 0.1 g/cm³.

In some examples, the spunbond layer may have a basis weight of from about 10 g/m² to about 40 g/m² and a thickness of at least about 250 µm. In some examples, the spunbond layer may have a basis weight of from about 10 g/m² and a density of up to about 0.2 g/cm³, for example, from about 0.01 g/cm³ to about 0.2 g/cm³. In some examples, the spunbond layer may have a thickness of at least about 250 µm and a density of up to about 0.2 g/cm³, for example, from about 0.01 g/cm³ to about 0.2 g/cm³. In some examples, the spunbond layer may have a basis weight of from about 10 g/m² to about 40 g/m², a thickness of at least about 250 µm and a density of up to about 0.2 g/cm³, for example, from about 0.01 g/cm³ to about 0.2 g/cm³.

In some examples, the spunbond layer may have a basis weight of at least about 10 g/m², for example, at least about 15 g/m², at least about 16 g/m², at least about 20 g/m², at least about 25 g/m², at least about 30 g/m², at least about 35 g/m², or at least about 40 g/m². In some examples, the spunbond layer may have a basis weight of up to about 40 g/m², for example, up to about 35 g/m², up to about 30 g/m², up to about 25 g/m², up to about 20 g/m², up to about 15 g/m², or up to about 10 g/m². The spunbond layer may have a basis weight of from about 10 g/m² to about 40 g/m², for example, from about 15 g/m² to about 35 g/m², about 16 g/m² to about 35 g/m², about 20 g/m² to about 30 g/m², about 15 g/m² to about 25 g/m². In some examples, the spunbond layer may have a basis weight of 16 g/m². In some examples, the spunbond layer may have a basis weight of 35 g/m². In some examples, the spunbond layer has a basis weight of from about 15 g/m² to about 35 g/m².

In some examples, the spunbond layer may have a thickness of at least about 250 µm, for example, at least about 290 µm, at least about 300 µm, at least about 500 µm, at least about 1 mm, or at least about 1.1 mm. In some examples, the spunbond layer may have a thickness of up to about 5 mm, for example, up to about 2.5 mm, up to about 2 mm, up to about 1.5 mm, up to about 1.4 mm, up to about 1.3 mm, up to about 1.2 mm, up to about 1.1 mm, up to about 1 mm, up to about 500 µm, up to about 450 µm, up to about 400 µm, or up to about 350 µm. In some examples, the spunbond layer has a thickness of from about 250 µm to about 5 mm, for example, from about 290 µm to about 1.2 mm or from about 300 µm to about 1.1 mm. In some examples, the spunbond layer may have a thickness of from about 250 µm to about 500 µm, for example, from about 260 µm to about 450 µm, about 270 µm to about 400 µm, about 280 µm to about 350 µm, about 290 µm to about 320 µm, or about 300 µm to about 310 µm. In some examples, the spunbond layer may have a thickness of from about 500 µm to about 2.5 mm, for example, about 700 µm to about 2 mm, about 800 µm to about 2 mm, about 900 µm to about 1.5 mm, about 950 µm to about 1.2 mm, about 1 mm to about 1.1 mm. In some examples, the spunbond layer has a thickness of about 300 µm to about 400 µm.

In some examples, the spunbond layer may have a density of up to about 0.2 g/cm³, for example, up to about 0.19 g/cm³, up to about 0.18 g/cm³, up to about 0.17 g/cm³, up to about 0.16 g/cm³, up to about 0.15 g/cm³, up to about 0.1 g/cm³, up to about 0.09 g/cm³, up to about 0.08 g/cm³, up to about 0.07 g/cm³, up to about 0.06 g/cm³, up to about 0.055 g/cm³, up to about 0.053 g/cm³. In some examples, the spunbond layer may have a density of at least about 0.01 g/cm³, for example, at least about 0.02 g/cm³, at least about 0.03 g/cm³, at least about 0.031 g/cm³, at least about 0.032 g/cm³. In some examples, the spunbond layer may have a density of from about 0.01 g/cm³ to about 0.2 g/cm³, for example, about 0.02 g/cm³ to about 0.19 g/cm³, about 0.029 g/cm³ to about 0.1 g/cm³, about 0.02 g/cm³ to about 0.09 g/cm³, about 0.029 g/cm³ to about 0.08 g/cm³, about 0.03 g/cm³ to about 0.07 g/cm³, 0.031 g/cm³ to about 0.06 g/cm³, about 0.032 g/cm³ to about 0.059 g/cm³ or about 0.01 g/cm³ to about 0.053 g/cm³. In some examples, the spunbond layer may have a density of from about 0.01 g/cm³ to about 0.05 g/cm³, for example, about 0.02 g/cm³ to about 0.04 g/cm³, about 0.025 g/cm³ to about 0.035 g/cm³. In some examples, the spunbond layer may have a density of from about 0.035 g/cm³ to about 0.1 g/cm³, for example, about 0.04 g/cm³ to about 0.08 g/cm³, about 0.05 g/cm³ to about 0.06 g/cm³, or about 0.051 g/cm³ to about 0.055 g/cm³.

The spunbond layer comprises bicomponent fibres. The bicomponent fibres of the spunbond layer may comprise two polymers, wherein one polymer has a lower melting point than the second polymer. In some examples, the bicomponent fibres comprise a first fibre portion and a second fibre portion, wherein the first fibre portion has a melting point that is at least about 2.5°C higher than the melting point of the second fibre portion, for example, at least about 5°C, or at least about 10°C. In some examples, the first fibre portion has a melting point that is up to 75°C higher than the melting point of the second fibre portion. In some examples, the first fibre portion has a melting point that is from about 2.5°C to about 75°C (e.g., from about 5°C to about 50°C, about 10°C to about 25°C) higher than the melting point of the second fibre portion. In some examples, the spunbond layer comprises side-by-side bicomponent fibres, sheath-core bicomponent fibres or a combination thereof. In some examples, the spunbond layer comprises side-by-side bicomponent fibres.

In some examples, the spunbond layer comprises bicomponent polyolefin fibres, bicomponent polyester fibres, or bicomponent polyolefin-polyester fibres. In some examples, the polyolefin may be selected from polyethylene, polypropylene, polybutylene, polypentylene or polyhexylene. In some examples, the polyethylene may be selected from low density polyethylene, linear low density polyethylene, medium density polyethylene, high density polyethylene or ultra-high density polyethylene. In some examples, the bicomponent fibres may be a combination of two polyethylene types with different melting points. In some examples, the polypropylene may be selected from isotactic polypropylene, atactic polypropylene or syndiotactic polypropylene. In some examples, the bicomponent fibres may be a combination of two different types of polypropylene with different melting points. In some examples, the bicomponent fibres comprise polypropylene-polyethylene fibres or polypropylene-(polypropylene copolymer) fibres. In some examples, the bicomponent fibres may comprise polypropylene-(polypropylene copolymer) fibres wherein the difference in melting point between the two polymers is about 5°C.

In some examples, the spunbond layer may comprise side-by-side polypropylene-polyethylene fibres (PP/PE).

In some examples, the spunbond layer comprises fibres with an average fibre diameter of at least about 10 µm, for example, at least about 11 µm, at least about 12 µm, at least about 13 µm, at least about 14 µm, at least about 15 µm, at least about 16 µm, at least about 17 µm, at least about 18 µm, at least about 19 µm, or at least about 20 µm. In some examples, the spunbond layer comprises fibres with an average fibre diameter of up to about 30 µm, for example, up to about 29 µm, up to about 28 µm, up to about 27 µm, up to about 26 µm, up to about 25 µm, up to about 24 µm, up to about 23 µm, up to about 22 µm, up to about 21 µm, or up to about 20 µm. In some examples, the spunbond layer comprises fibres with an average fibre diameter of from about 10 µm to about 30 µm, for example, about 11 µm to about 30 µm, about 12 µm to about 29 µm, about 13 µm to about 28 µm, about 14 µm to about 27 µm, about 15 µm to about 26 µm, about 16 µm to about 25 µm, about 17 µm to about 24 µm, about 18 µm to about 23 µm, about 19 µm to about 22 µm, or about 20 µm to about 21 µm.

In some examples, the spunbond layer may have an air permeability of up to about 15,000 I/m²s, for example, up to about 14,000 l/m²s, up to about 13,000 I/m²s, up to about 12,000 I/m²s, up to about 11,000 I/m²s, or up to about 10,000 I/m²s. In some examples, the spunbond layer may have an air permeability of at least about 1000 I/m²s, for example, at least about 2000 I/m²s, at least about 3000 I/m²s, at least about 3500 I/m²s, at least about 4000 I/m²s, at least about 4500 l/m²s, at least about 5000 I/m²s, or at least about 5500 I/m²s. In some examples, the spunbond layer may have an air permeability of from about 1000 I/m²s to about 15,000 I/m²s, for example, from about 2000 I/m²s to about 14,000 I/m²s, about 3000 I/m²s to about 13,000 I/m²s, about 4000 I/m²s to about 12,000 l/m²s, about 4500 I/m²s to about 11,000 I/m²s, or about 5500 I/m²s to about 10,000 I/m²s.

In some examples, the filter medium is not suitable for use at high temperatures (e.g., above 50°C or above 100°C). While such filter media can be used in, for example, building air conditioning systems, HVAC units, and so forth, they may not be suitable for use in, for example, automobile air intake filters, which may, in some examples, have to be suitable for use at higher temperatures.

### Melt-blown layer

The filter medium comprises a melt-blown layer, the melt-blown layer disposed between the carrier layer and the spunbond layer. In some examples, the melt-blown layer contacts the carrier layer. In some examples, the melt-blown layer contacts the spunbond layer. In some examples, the melt-blown layer contacts the carrier layer and the spunbond layer.

The melt-blown layer may be any nonwoven layer produced by melt-blowing. In some examples, the melt-blown layer comprises any melt-blown material. The melt-blown layer may comprise any melt-blown polymer fibre layer. In some examples, the melt-blown layer may comprise a fine fibre melt-blown layer.

In some examples, the melt-blown layer has a basis weight of at least about 10 g/m², for example, at least about 15 g/m², at least about 20 g/m², at least about 25 g/m², or at least about 30 g/m². In some examples, the melt-blown layer has a basis weight of up to about 50 g/m², for example, up to about 45 g/m², up to about 40 g/m², up to about 35 g/m², or up to about 30 g/m². In some examples, the melt-blown layer has a basis weight of from about 10 g/m² to about 50 g/m², for example, about 15 g/m² to about 45 g/m², about 20 g/m² to about 40 g/m², or about 25 g/m² to about 35 g/m².

In some examples, the melt-blown layer may have a thickness of at least about 200 µm, for example, at least about 250 µm, at least about 300 µm, at least about 350 µm, at least about 400 µm, at least about 450 µm, at least about 500 µm, at least about 550 µm, at least about 600 µm, at least about 650 µm, or at least about 700 µm. In some examples, the melt-blown layer may have a thickness of up to about 1 mm, for example, up to about 950 µm, up to about 900 µm, up to about 850 µm, up to about 800 µm, up to about 750 µm, or up to about 700 µm. In some examples, the melt-blown layer may have a thickness of from about 200 µm to about 1 mm, for example, about 250 µm to about 950 µm, about 350 µm to about 950 µm, about 400 µm to about 900 µm, about 450 µm to about 850 µm, about 500 µm to about 800 µm, about 550 µm to about 750 µm, about 600 µm to about 700 µm, or about 650 µm to about 800 µm. In some examples, measurement of the thickness of the melt-blown layer may have a margin of error of up to about 100 µm.

In some examples, the melt-blown layer has an air permeability of at least about 250 I/m²s, for example, at least about 300 l/m²s, at least about 350 I/m²s, at least about 400 I/m²s, at least about 450 I/m²s, at least about 500 I/m²s, at least about 550 I/m²s, at least about 600 I/m²s, at least about 650 I/m²s, at least about 700 I/m²s, at least about 750 I/m²s, at least about 800 l/m²s, at least about 850 I/m²s, at least about 900 I/m²s, at least about 950 I/m²s, at least about 1000 I/m²s, at least about 1050 I/m²s, at least about 1100 I/m²s, at least about 1150 I/m²s, or at least about 1200 I/m²s. In some examples, the melt-blown layer has an air permeability of up to about 1400 I/m²s, for example, up to about 1350 l/m²s, up to about 1300 I/m²s, up to about 1250 I/m²s, or up to about 1200 I/m²s. In some examples, the melt-blown layer has an air permeability of from about 250 I/m²s to about 1400 I/m²s, for example, about 500 I/m²s to about 1350 I/m²s, about 700 I/m²s to about 1300 I/m²s, about 850 l/m²s to about 1250 I/m²s, about 1000 I/m²s to about 1200 I/m²s. In some examples, the measurement of the air permeability may have a margin of error of up to 150 I/m²s.

In some examples, the melt-blown layer comprises fibres with an average fibre diameter of up to about 6 µm, for example, up to about 5 µm. In some examples, the melt-blown layer comprises fibres with an average fibre diameter of 2 µm or less. In some examples, the melt-blown layer comprises fibres with an average fibre diameter of at least about 2 µm. In some examples, the melt-blown layer comprises fibres with an average fibre diameter of from about 2 µm to about 6 µm, for example, about 2 µm to about 5 µm.

In some examples, the melt-blown layer may comprise or consist of polymer fibres. In some examples, the melt-blown layer may comprise additives. In some examples, the additives may be hydrophilizing agents, hydrophobizing agents, crystallization accelerators, charge enhancing additives, pigments or dyes, or a combination thereof.

In some examples, the melt-blown layer may comprise monocomponent fibres. In some examples, the melt-blown layer may comprise polyolefin fibres, for example, polyethylene fibres, polypropylene fibres, polymethylpentene fibres, polybutylene fibres, polyisobutylene fibres, polypentylene fibres, or polyhexylene fibres. In some examples, the melt-blown layer may comprise fibres of a copolymer.

### Carrier Laver

The filter medium comprises a carrier layer. The carrier layer may be in contact with the melt-blown layer. In some examples, the carrier layer provides no additional filtration, instead acting as a support layer and/or a protective layer.

In some examples, the carrier layer is a nonwoven layer. In some examples, the carrier layer may be any nonwoven layer. In some examples, the carrier layer may be a wet-laid nonwoven layer, a dry-laid nonwoven layer, or a spunbond layer.

In some examples, the carrier layer may comprise natural fibres, synthetic fibres or a combination thereof. In some examples, the carrier layer comprises or is a monocomponent fibre layer, for example, a monocomponent fibre nonwoven layer. In some examples, the carrier layer comprises polymer fibres, for example, monocomponent polymer fibres. In some examples, the carrier layer may comprise any polymer fibres, for example, any monocomponent polymer fibres. In some examples, the monocomponent polymer fibres may comprise monocomponent homopolymer fibres or monocomponent copolymer fibres.

In some examples, the carrier layer may have a basis weight of up to about 20 g/m², for example, up to about 19 g/m², up to about 18 g/m², up to about 17 g/m², up to about 16 g/m², up to about 15 g/m², or up to about 14 g/m². In some examples, the carrier layer has a basis weight of at least about 10 g/m², for example, at least about 11 g/m², at least about 12 g/m², at least about 13 g/m², at least about 14 g/m². In some examples, the carrier layer may have a basis weight of from about 10 g/m² to about 20 g/m², for example, about 10 g/m² to about 19 g/m², about 11 g/m² to about 18 g/m², about 12 g/m² to about 17 g/m², about 13 g/m² to about 16 g/m², or about 14 g/m² to about 16 g/m².

In some examples, the carrier layer has an air permeability of at least about 4500 I/m²s, for example, at least about 4600 I/m²s, at least about 4700 I/m²s, at least about 4800 l/m²s, at least about 4900 I/m²s, at least about 5000 I/m²s, at least about 5100 I/m²s, at least about 5200 I/m²s, at least about 5300 I/m²s, at least about 5400 I/m²s, at least about 5500 I/m²s, at least about 5600 I/m²s, at least about 6000 I/m²s, at least about 6500 l/m²s, at least about 7000 I/m²s, at least about 7500 I/m²s, at least about 8000 I/m²s, at least about 8500 I/m²s, at least about 9000 I/m²s, at least about 10,000 I/m²s. In some examples, the carrier layer has an air permeability of up to about 10,000 I/m²s, for example, up to about 9500 I/m²s, up to about 9000 I/m²s, up to about 8500 l/m²s, up to about 8000 I/m²s, up to about 7500 I/m²s, up to about 7000 I/m²s, up to about 6500 I/m²s, up to about 6400 I/m²s, up to about 6300 I/m²s, up to about 6200 I/m²s, up to about 6100 I/m²s, up to about 6000 I/m²s, up to about 5900 l/m²s, up to about 5800 I/m²s, or up to about 5700 I/m²s. In some examples, the carrier layer has an air permeability of from about 4500 I/m²s to about 10,000 I/m²s, for example, about 4600 I/m²s to about 9000 I/m²s, about 4700 I/m²s to about 7500 I/m²s, about 5000 I/m²s to about 6500 l/m²s, about 4600 I/m²s to about 6400 I/m²s, about 4700 I/m²s to about 6300 I/m²s, about 4800 I/m²s to about 6200 I/m²s, about 4900 I/m²s to about 6100 I/m²s, about 5000 I/m²s to about 6000 l/m²s, about 5100 I/m²s to about 5900 I/m²s, about 5200 I/m²s to about 5800 I/m²s, about 5300 I/m²s to about 5700 I/m²s, about 5400 I/m²s to about 6000 I/m²s, about 5500 I/m²s to about 6500 l/m²s, or about 5600 I/m²s to about 5900 I/m²s.

In some examples, the carrier layer has a thickness of at least about 50 µm, for example, at least about 60 µm, at least about 70 µm, at least about 80 µm, at least about 90 µm, at least about 100 µm. In some examples, the carrier layer has a thickness of up to about 250 µm, for example, up to about 240 µm, up to about 230 µm, up to about 220 µm, up to about 210 µm, up to about 200 µm, up to about 190 µm, up to about 180 µm. In some examples, the carrier layer has a thickness of from about 50 µm to about 250 µm, for example, from about 60 µm to about 240 µm, from about 70 µm to about 220 µm, from about 80 µm to about 200 µm, or from about 100 µm to about 180 µm (i.e., about 0.1 mm to about 0.18 mm).

In some examples, the carrier layer comprises polymer fibres, for example, polyolefin fibres. In some examples, the polyolefin fibres may be polyethylene fibres, polypropylene fibres, polybutylene fibres, polypentylene fibres or polyhexylene fibres. In some examples, the carrier layer may comprise polypropylene fibres.

In some examples, the carrier layer comprises fibres with an average fibre diameter of at least about 10 µm, for example, at least about 11 µm, at least about 12 µm, at least about 13 µm, at least about 14 µm, at least about 15 µm, at least about 16 µm, or at least about 17 µm. In some examples, the carrier layer comprises fibres with an average fibre diameter of up to 35 µm, for example, up to about 30 µm, up to about 25 µm, up to about 24 µm, up to about 23 µm, up to about 22 µm, up to about 21 µm, up to about 20 µm, up to about 19 µm, or up to about 18 µm. In some examples, the carrier layer comprises fibres with an average fibre diameter of about 10 µm to about 35 µm, for example, about 11 µm to about 30 µm, about 12 µm to about 25 µm, about 13 µm to about 20 µm, about 14 µm to about 19 µm, about 15 µm to about 18 µm, or about 16 µm to about 17 µm.

In some examples, the carrier layer is a spunbond layer. This spunbond carrier layer may be the different from the spunbond layer of the filter medium.

### Filters

In an aspect, there is described a filter comprising a filter medium. The filter may comprise any filter medium described herein. In some examples, the filter may comprise a filter medium comprising, consisting of or consisting essentially of a carrier layer, a melt-blown layer and a spunbond layer, wherein the melt-blown layer may be disposed between the carrier layer and the spunbond layer.

The filter may be a bag filter, a pocket filter, a panel filter, a compact filter, or a filter mat. In some examples, the filter may be a bag filter or a pocket filter. The filter may comprise a frame and the filter medium may be disposed within or otherwise attached to the frame.

In some examples, the filter may be an air filter. In some examples, the filter may be an HVAC filter.

Also described herein is an HVAC unit comprising a filter. In some examples, the HVAC unit may comprise any filter described herein. In some examples, the HVAC unit may comprise a filter comprising any filter medium described herein.

### Method of producing filter media

In another aspect, there is provided a method of producing a filter medium comprising: melt-blowing a polymer onto a carrier layer to form a first composite comprising a melt-blown layer and a carrier layer; and contacting a spunbond layer with the first composite to form a filter medium comprising a carrier layer; a melt-blown layer; and a spunbond layer, wherein the melt-blown layer is disposed between the carrier layer and the spunbond layer; wherein the spunbond layer comprises bicomponent fibres. The filter medium may be any filter medium described herein. Thus, the carrier layer may be any carrier layer described herein, the melt-blown layer may be any melt-blown layer described herein and the spunbond layer may be any spunbond layer described herein.

In some examples, the method of producing a filter medium comprises: melt-blowing a polymer onto a carrier layer to form a first composite comprising a melt-blown layer and a carrier layer; and contacting a spunbond layer with the first composite to form a filter medium comprising a carrier layer; a melt-blown layer; and a spunbond layer, wherein the melt-blown layer is disposed between the carrier layer and the spunbond layer; wherein the spunbond layer comprises bicomponent fibres, has a basis weight of from about 10 g/m² to about 40 g/m² and a thickness of at least about 250 µm.

In some examples, contacting the spunbond layer with the first composite may comprise contacting a preformed spunbond layer with the first composite or forming the spunbond layer on the first composite. In some examples, forming the spunbond layer on the first composite may comprise forming a nonwoven layer on the first composite by melt spinning and then heating the nonwoven layer to a temperature above the melting temperature of the lower melting point material (polymer) of the bicomponent fibres, for example, heating to a temperature between the melting point of the lower melting point material and the melting point of the higher melting point material.

In some examples, the method may comprise forming the spunbond layer before contacting the spunbond layer with the first composite. In some examples, the spunbond layer is produced by melt spinning to produce a nonwoven layer, followed by heating the nonwoven layer to a temperature above the melting temperature of the lower melting point material (polymer) of the bicomponent fibres. In some examples, the spunbond layer is produced by melt spinning to produce a nonwoven layer, followed by heating the nonwoven layer to a temperature between the melting temperature of the lower melting point material (polymer) of the bicomponent fibres and the melting temperature of the higher melting point material (polymer). The melting of the lower melting point material (polymer) causes shrinkage of the lower melting point polymer, changing the structure of the spunbond layer. The melting of the lower melting point material (polymer) may increase the thickness of the spunbond layer and/or reduce the density of the spunbond layer. As a result, the thickness of the spunbond layer may be greater than expected for a given basis weight layer. In addition or alternatively, the density of the spunbond layer may be lower than expected for a given basis weight layer. In some examples, the spunbond layer may be formed in a Reicofil spunbond line.

In some examples, the method comprises melt-blowing a polymer onto a carrier layer to form a first composite comprising a melt-blown layer and a carrier layer; forming a spunbond layer by melt spinning bicomponent fibres to form a meltspun nonwoven layer and then heating the meltspun nonwoven layer to a temperature above the melting point of the lower melting point material of the bicomponent fibres to form a spunbond layer; and contacting the spunbond layer with the first composite to form a filter medium, wherein the filter comprises the melt-blown layer disposed between the carrier layer and the spunbond layer.

In some examples, the layers of the filter medium are adhered together. In other examples, the layers of the filter medium are adhered together without any bonding. In some examples, the layers of the filter medium are adhered together by through-air bonding, heat treatment, ultrasonic welding, glueing, hydro entangling, calandering or without any bonding. In some examples, the layers of the filter medium are adhered together by through-air bonding, heat treatment or a combination thereof.

### EXAMPLES

The following illustrates examples of the methods and other aspects described herein. Thus, these Examples should not be considered as limitations of the present disclosure, but are merely in place to teach how to make examples of the present disclosure.

### Materials

### Carrier layer

Spunbond (monocomponent) polypropylene with a basis weight of 14 g/m², an air permeability of 5686 I/m²s (as measured by the EDANA 140.1 method, with a head of 20 cm² and a pressure of 196 Pa), an average fibre diameter of 17 µm and a thickness of 0.10 mm to 0.18 mm.

### Melt-blown layer

Melt-blown layer 1: Polypropylene melt-blown layer with a basis weight of 20 g/m², an air permeability of 380 I/m²s at 200 Pa, and a thickness of 0.4 mm (as measured by DIN EN ISO 9073-2).

Melt-blown layer 2: polypropylene melt-blown layer with a basis weight of 12 g/m², an air permeability of 1025 I/m²s at 200 Pa and a thickness of 0.23 mm (as measured by DIN EN ISO 9073-2)

### Bicomponent spunbond pre-filter layer

Spunbond layer 1: Spunbond bicomponent polypropylene-polyethylene (side-by-side configuration). After producing the spunbond material, it was heated to melt/shrink the lower melting point polymer, decreasing the density and increasing the layer thickness. The material has a thickness of 0.3 mm (measured at a plate pressure of 0.005 bar), a basis weight of 16 g/m², an average fibre diameter of 20 µm, and an air permeability of 10,000 ± 1500 I/m²s. The calculated density (basis weight/thickness) is 0.053 g/cm³.

Spunbond layer 2: Spunbond bicomponent polypropylene-polyethylene (side-by-side configuration). This spunbond layer was produced in a similar way to spunbond layer 1, but it had a thickness of 1.1 mm (measured at a plate pressure of 0.005 bar), a basis weight of 35 g/m², an average fibre diameter of 20 µm and an air permeability of 5500 ± 1000 I/m²s. The calculated density is 0.032 g/cm³.

### Carded non-woven pre-filter layer

Carded polypropylene layer with a basis weight of 40 ±5 g/m², a thickness of 0.7 ± 0.2 mm, an air permeability of 8500 ± 1000 I/m²s, and a density of 0.057 g/cm³.

### Monocomponent spunbond pre-filter layer

A monocomponent polypropylene spunbond layer with a basis weight of 14 g/m², a thickness of 0.15 mm, an air permeability of 9000 I/m²s.

### Example 1

A filter medium was produced by melt-blowing polypropylene onto a carrier layer to produce a first composite comprising melt-blown layer 1 disposed on a carrier layer. Spunbond layer 1 was then contacted with the melt-blown layer of the first composite to form the filter medium.

### Example 2

A filter medium was produced by the process described in Example 1 except that spunbond layer 2 was used instead of spunbond layer 1.

### Example 3

A filter medium was produced by the process described in Example 1 except that the first composite comprised melt-blown layer 2 disposed on the carrier layer.

### Example 4

A filter medium was produced by the process described in Example 2 except that the first composite comprised melt-blown layer 2 disposed on the carrier layer.

### Comparative Example 1

A filter medium was produced by the process described in Example 1 except that the carded non-woven pre-filter layer was used instead of spunbond layer 1.

### Comparative Example 2

A filter medium was produced by the process described in Example 1 except that a spunbond layer comprising monocomponent fibres was used instead of spunbond layer 1.

### Comparative Example 3

A filter medium was produced by the process described in Comparative Example 1 except that the first composite comprised melt-blown layer 2 disposed on the carrier layer.

### Comparative Example 4

A filter medium was produced by the process described in Comparative Example 2 except that the first composite comprised melt-blown layer 2 disposed on the carrier layer.

### Test results

**Table 1 - ePM1**

| | Comparative Example 1 | Example 1 | Example 2 | Comparative Example 2 |
|---|---|---|---|---|
| Basis weight [g/m²] | 76 | 52 | 74 | 50 |
| Thickness (at 0.5 kPa) [mm] | 1.07 | 1.09 | 1.32 | 0.84 |
| Air permeability [l/m²s] | 340 | 340 | 360 | 310 |
| Dust loading (at +50 Pa*) [g/m²] | 13.90 | 14.90 | 16.50 | 12.50 |

| | | | | |
|---|---|---|---|---|
| *Palas MFP3000, 20 cm/s, 75 mg/m³ | | | | |

**Table 2 - ePM2.5**

| | Comparative Example 3 | Example 3 | Example 4 | Comparative Example 4 |
|---|---|---|---|---|
| Basis weight [g/m²] | 68 | 44 | 66 | 42 |
| Thickness (at 0.5 kPa) [mm] | 1.21 | 0.96 | 1.24 | 0.71 |
| Air permeability [l/m²s] | 740 | 720 | 650 | 710 |
| Dust loading (at +50 Pa*) [g/m²] | 19.30 | 19.40 | 20.50 | 16.86 |

| | | | | |
|---|---|---|---|---|
| *Palas MFP3000, 20 cm/s, 75 mg/m³ | | | | |

The test results above show that the inclusion of a spunbond layer of the type described herein (either spunbond layer 1 or spunbond layer 2) in the filter medium instead of the carded nonwoven layer provides a filter medium with a comparable thickness (or in some cases a lower thickness) without using as much material (i.e., with a lower basis weight). Moreover, the filter media provide comparable or improved dust holding capacity at a comparable efficiency without requiring as much material to be used.

Furthermore, filter media according to Comparative Examples 2 and 4 (containing a spunbond layer comprising monocomponent fibres) have much lower dust holding capacities than filter media according to Examples 1 to 4.

While the invention has been described with reference to certain examples, those skilled in the art will appreciate that various modifications, changes, omissions, and substitutions can be made without departing from the spirit of the disclosure. It is intended, therefore, that the invention be limited by the scope of the following claims and their equivalents. Unless otherwise stated, the features of any dependent claim can be combined with the features of any of the other dependent claims and any of the independent claims.

## Claims

1. A filter medium comprising:
a carrier layer;
a melt-blown layer; and
a spunbond layer,
wherein the melt-blown layer is disposed between the carrier layer and the spunbond layer; and
wherein the spunbond layer comprises bicomponent fibres, has a basis weight of from about 10 g/m² to about 40 g/m² and a thickness of at least about 250 µm.

2. The filter medium according to claim 1, wherein the spunbond layer has a thickness of from about 250 µm to about 5 mm, for example, from about 290 µm to about 1.2 mm.

3. The filter medium according to any preceding claim, wherein the spunbond layer has a density of up to about 0.2 g/cm³.

4. The filter medium according to any preceding claim, wherein the spunbond layer has a density of from about 0.01 g/cm³ to about 0.2 g/cm³, for example, from about 0.01 g/cm³ to about 0.1 g/cm³, or from about 0.029 g/cm³ to about 0.059 g/cm³.

5. The filter medium according to any preceding claim, wherein the spunbond layer has a basis weight of from about 15 g/m² to about 35 g/m².

6. The filter medium according to any preceding claim, wherein the spunbond layer comprises side-by-side bicomponent fibres, sheath-core bicomponent fibres or a combination thereof.

7. The filter medium according to any preceding claim, wherein the spunbond layer comprises bicomponent polyolefin fibres (for example, polypropylene-polyethylene fibres or polypropylene-(polypropylene copolymer) fibres), polyester fibres, or a combination thereof.

8. The filter medium according to any preceding claim, wherein the carrier layer comprises a nonwoven layer, for example, a spunbond carrier layer.

9. The filter medium according to any preceding claim, wherein the carrier layer is a mono-component fibre nonwoven layer.

10. The filter medium according to any preceding claim, wherein the carrier layer has a basis weight of up to about 20 g/m², for example, a basis weight of from about 10 g/m² to about 20 g/m².

11. The filter medium according to any preceding claim, wherein the carrier layer comprises polyolefin fibres, for example, polypropylene fibres.

12. The filter medium according to any preceding claim, wherein the melt-blown layer has a basis weight of from about 10 g/m² to about 50 g/m².

13. A method of producing a filter medium comprising:
melt-blowing a polymer onto a carrier layer to form a first composite comprising a melt-blown layer and a carrier layer; and
contacting a spunbond layer with the first composite to form a filter medium comprising a carrier layer; a melt-blown layer; and a spunbond layer, wherein the melt-blown layer is disposed between the carrier layer and the spunbond layer;
wherein the spunbond layer comprises bicomponent fibres, has a basis weight of from about 10 g/m² to about 40 g/m² and a thickness of at least about 250 µm.

14. A filter comprising a filter medium according to claim 1.

15. An HVAC unit comprising a filter medium according to claim 1 or a filter according to claim 14.
